# EUROPEAN PATENT APPLICATION

(11) **EP 3 522 589 A1**
(43) Date of publication of application: **07.08.2019**
(21) Application number: 17854767.5
(22) Date of filing: 22.09.2017
(51) Int. Cl.: H04W 28/02, H04W 28/24, H04W 72/12

(54) **METHOD AND APPARATUS FOR MANAGING NETWORK SLICE AND COMPUTER STORAGE MEDIUM**

(30) Priority: 30.09.2016 CN 201610877932
(71) Applicant: ZTE Corporation, Shenzhen, Guangdong 518057 (CN)
(72) Inventor: HE, Qingchun, Shenzhen Guangdong 518057 (CN); HUANG, He, Shenzhen Guangdong 518057 (CN); LI, Nan, Shenzhen Guangdong 518057 (CN)
(74) Representative: Regimbeau
(86) International application number: PCT/CN2017/102888
(87) International publication number: WO 2018/059317

(57) **Abstract**

Disclosed are a method and apparatus for managing a network slice and a computer storage medium. The method includes: a first network element receiving slice configuration information sent by a second network element; and the first network element scheduling and managing each slice of an access network side according to the slice configuration information.

## Description

### CROSS-REFERENCES TO RELATED APPLICATIONS

This application is based on and claims priority to a Chinese patent application No. 201610877932.3 filed on September 30, 2016, the disclosure of which is incorporated herein by reference in its entirety.

### TECHNICAL FIELD

The present invention relates to the field of wireless communication systems and, in particular, relates to a method and apparatus for managing a network slice, and a computer storage medium.

### BACKGROUND

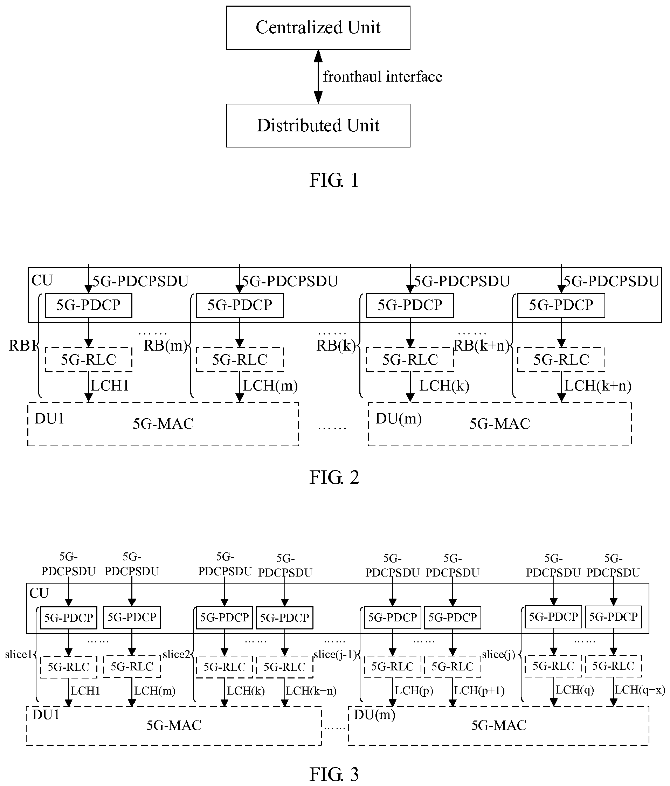

In the fifth generation (5G) mobile communication, massive connections and user's higher rate requirements pose a great challenge to a transmission capacity of a common public radio interface (CPRI) between a remote radio unit (RRU) and a building baseband unit (BBU) in the Long Term Evolution (LTE) system. Because the CPRI interface is used for transmitting an IQ signal processed by physical layer coding and modulation, the CPRI interface has higher requirements on bandwidth and transmission delay. When the 5G air interface rate is increased to tens of Gbps, the traffic demand of the CPRI interface will be increased to a Tbps level, which brings tremendous pressure on network deployment costs and difficulties. Therefore, in the 5G system, the division point of a fronthaul interface needs to be redefined. For example, a delay-insensitive user plane function is implemented in a centralized unit (CU) and a delay-sensitive user plane function is implemented in a distributed unit (DU). The transmission between the CU and the DU is performed through an ideal and/or non-ideal fronthaul interface, referring to FIG. 1.

Based on the above description, the delay-insensitive user plane function includes data header compression, encryption and integrity protection, retransmission, sender serial number maintenance and receiver ordering for higher-layer traffic data, Automatic Repeat reQuest (ARQ) and the like. The delay-sensitive user plane function includes data segments, concatenation, re-segments, reassembly, multiplexing of multiple logical channels, Hybrid Automatic Repeat reQuest (HARQ) and the like. It is intuitively seen from the above function partition of the CU and the DU that the functions (including scheduling, a Link Control Protocol (LCP) for logical channel priority processing, logical channel multiplexing and demultiplexing, etc.) of a media access control (MAC) layer will be implemented in the DU (referring to FIG. 2), so that the capability of the air interface is more suitable for the data transmission between the CU and the DU, which satisfies the Quality of Service (QoS) and transmission characteristics between the CU and the DU.

One research focus of the 5G technologies is a network slice between the CU and the DU in the above solution. The network slice refers to that different services are divided into different slices for implementation, which requires that each slice operates independently without interfering each other, (referring to FIG. 3). Based on this, how to achieve the independent operation of each slice without interfering each other is a problem to be solved.

### SUMMARY

To solve the preceding technical problem, embodiments of the present invention provide a method and apparatus for managing a network slice, and a computer storage medium.

An embodiment of the present invention provides a method for managing a network slice. The method includes the steps described below.

A first network element receives slice configuration information sent by a second network element.

The first network element schedules and manages each slice on an access network side according to the slice configuration information.

In the above solution, on the access network side, the slices are divided according to different radio bearers or according to different cells or according to different frequencies or according to different traffic types or according to an indication of a core network, or according to different physical layer characteristics.

In the above solution, the slice configuration information includes at least one of: a mapping relationship between the slices and radio bearers (RBs), a mapping relationship between the slices and logical channels (LCHs), a mapping relationship between the slices and physical resources/resource pools, a priority of the slice, a quality of service level of the slice, a maximum transmission rate of the slice, and a resource usage percentage of the slice.

In the above solution, the slice configuration information is configured through a dedicated procedure and/or a global procedure.

In the above solution, the resource usage percentage of the slice is used for indicating a size of a resource block reserved by a media access control (MAC) entity in the first network element for the slice or a percentage of available resources;

The priority of the slice is used for indicating a priority for the MAC entity in the first network element to schedule data in the slice.

The quality of service level of the slice is used for indicating the MAC entity in the first network element scheduling the slice according to the quality of service level.

In the above solution, the method further includes the step described below.

The MAC entity in the first network element allocates physical resources to one or more slices according to the slice configuration information.

In the above solution, a plurality of RBs and/or LCHs are mapped onto one slice, or different RBs and/or LCHs are mapped onto different slices.

In the above solution, the first network element scheduling and managing each slice on the access network side according to the slice configuration information includes the following step.

The MAC entity in the first network element preforms centralized scheduling and management on one or more slices.

In the above solution, when the first network element requests the slice configuration information from the second network element, the first network element receives the slice configuration information sent by the second network element.

An embodiment of the present invention provides a method for managing a network slice. The method includes the steps described below.

A second network element generates slice configuration information.

The second network element sends the slice configuration information to a first network element to enable the first network element to schedule and manage each slice on an access network side according to the slice configuration information.

In the above solution, on the access network side, slices are divided according to different radio bearers or according to different cells or according to different frequencies or according to different traffic types or according to an indication of a core network or according to different physical layer characteristics.

In the above solution, the slice configuration information includes at least one of: a mapping relationship between slices and RBs, a mapping relationship between slices and LCHs, a mapping relationship between slices and physical resources/resource pools, a priority of the slice, a quality of service level of the slice, a maximum transmission rate of the slice and a resource usage percentage of the slice.

In the above solution, the slice configuration information is configured through a dedicated procedure and/or a global procedure.

In the above solution, the resource usage percentage of the slice is used for indicating a size of a resource block reserved by a MAC entity in the first network element for the slice.

The priority of the slice is used for indicating a priority for the MAC entity in the first network element to schedule data in the slice.

The quality of service level of the slice is used for indicating the MAC entity in the first network element scheduling the slice according to the quality of service level.

In the above solution, a plurality of RBs and/or LCHs are mapped onto one slice, or different RBs and/or LCHs are mapped onto different slices.

In the above solution, the second network element sends the slice configuration information to the first network element under upon the following condition is triggered.

The second network element sends the slice configuration information to the first network element in response to a slice addition event or a slice deletion event or a slice update event on the access network side.

Alternatively, the second network element sends the slice configuration information to the first network element upon the second network element receiving a request for the slice configuration information sent by the first network element.

Alternatively, the second network element sends the slice configuration information to the first network element in response to establishment, deletion or reconfiguration of an RB and/or an LCH of a user.

Alternatively, the second network element sends the slice configuration information to the first network element in response to change of a slice to which the RB and/or the LCH of the user belongs.

An embodiment of the present invention provides an apparatus for managing a network slice. The apparatus includes a receiving unit and a management unit.

The receiving unit is configured to receive slice configuration information sent by a second network element.

The management unit is configured to schedule and manage each slice on an access network side according to the slice configuration information.

In the above solution, on the access network side, slices are divided according to different radio bearers or different cells or different frequencies or different traffic types or an indication of a core network or different physical layer characteristics.

In the above solution, the slice configuration information includes a mapping relationship between the slices and RBs, a mapping relationship between the slices and LCHs, a mapping relationship between the slices and physical resources/resource pools, a priority of the slice, a quality of service level of the slice, a maximum transmission rate of the slice, and a resource usage percentage of the slice.

In the above solution, the slice configuration information is configured through a dedicated procedure and/or a global procedure.

In the above solution, the resource usage percentage of the slice is used for indicating a size of a resource block reserved by a MAC entity in the first network element for the slice or a percentage of available resources.

The priority of the slice is used for indicating a priority for the MAC entity in the first network element to schedule data of the slice.

The quality of service level of the slice is used for indicating the MAC entity in the first network element scheduling the slice according to the quality of service level.

In the above solution, the management unit refers to a MAC entity in the first network element and is configured to allocate physical resources to at one or more slices according to the slice configuration information.

In the above solution, a plurality of RBs and/or LCHs are mapped onto one slice, or different RBs and/or LCHs are mapped onto different slices.

In the above solution, the management unit refers to a MAC entity in the first network element and is configured to perform centralized scheduling and management on one or more slices.

In the above solution, the apparatus further includes a sending unit. The sending unit is configured to request the slice configuration information from the second network element.

An embodiment of the present invention provides an apparatus for managing a network slice. The apparatus include a generation unit and a sending unit.

The generation unit is configured to generate slice configuration information.

The sending unit is configured to send the slice configuration information to a first network element to enable the first network element to schedule and manage each slice on an access network side according to the slice configuration information.

In the above solution, on the access network side, slices are divided according to different radio bearers or different cells or different frequencies or different traffic types or an indication of a core network or different physical layer characteristics.

In the above solution, the slice configuration information includes at least one of: a mapping relationship between the slices and RBs, a mapping relationship between the slices and LCHs, a mapping relationship between the slices and physical resources/resource pools, a priority of the slice, a quality of service level of the slice, a maximum transmission rate of the slice, and a resource usage percentage of the slice.

In the above solution, the slice configuration information is configured through a dedicated procedure and/or a global procedure.

In the above solution, the resource usage percentage of the slice is used for indicating a size of a resource block reserved by a MAC entity in the first network element for the slice or a percentage of available resources.

The priority of the slice is used for indicating a priority for the MAC entity in the first network element to schedule data in the slice.

The quality of service level of the slice is used for indicating the MAC entity in the first network element scheduling the slice according to the quality of service level.

In the above solution, a plurality of RBs and/or LCHs are mapped onto one slice, or different RBs and/or LCHs are mapped onto different slices.

In the above solution, the sending unit sends the slice configuration information to the first network element under the trigger condition described below.

A second network element sends the slice configuration information to the first network element in response to a slice addition event or a slice deletion event or a slice update event on the access network side.

Alternatively, the second network element sends the slice configuration information to the first network element when the second network element receives a request for the slice configuration information sent by the first network element.

Alternatively, the second network element sends the slice configuration information to the first network element when an establishment, deletion or reconfiguration process of an RB and/or an LCH of a user occurs.

Alternatively, the second network element sends the slice configuration information to the first network element when a slice to which the RB and/or the LCH of the user belongs changes.

An embodiment of the present invention provides a computer storage medium which stores computer programs configured to execute the method for managing the network slice described above.

In the technical solutions of the embodiments of the present invention, the first network element requests the slice configuration information from the second network element and receives the slice configuration information sent by the second network element so that the first network element determines a correspondence between the RBs or LCHs and the slices as well as resource usage situations of the slices; and the first network element performs resource allocation and logical channel priority processing for the slices according to the slice configuration information, achieving slice isolation on the access network side and avoiding interference between the slices.

### BRIEF DESCRIPTION OF DRAWINGS

FIG. 1 is a schematic diagram of an architecture in which a CU and a DU are separated according to an embodiment of the present invention;
FIG. 2 is a schematic diagram of function partition of a CU and a DU according to an embodiment of the present invention;
FIG. 3 is a schematic diagram of a mapping relationship between slices and radio bearers according to an embodiment of the present invention;
FIG. 4 is a flowchart 1 of a method for managing a network slice according to an embodiment of the present invention;
FIG. 5 is a flowchart 2 of a method for managing a network slice according to an embodiment of the present invention;
FIG. 6 is a flowchart of generating and sending global slice configuration information according to an embodiment of the present invention;
FIG. 7 is a flowchart of sending slice configuration information requested by a DU according to an embodiment of the present invention;
FIG. 8 is a flowchart of generating and sending user-specific configuration information in response to triggering of establishment, deletion or reestablishment of an RB and/or LCH and/or changing of a slice to which the RB and/or LCH of a user belongs according to an embodiment of the present invention;
FIG. 9 is a flowchart of slice scheduling and selection by a DU based on a buffer status report (BSR) reported by a terminal according to an embodiment of the present invention;
FIG. 10 is a structure diagram 1 of an apparatus for managing a network slice according to an embodiment of the present invention; and
FIG. 11 is a structure diagram 2 of an apparatus for managing a network slice according to an embodiment of the present invention.

### DETAILED DESCRIPTION

To provide a more detailed understanding of features and content of embodiments of the present invention, implementation of the embodiments of the present invention is described below in detail with reference to the drawings. The drawings are provided for reference only and are not intended to limit the embodiments of the present invention.

Considering the diversity of the future 5G traffic and schemes of the network slice, one scheme is that different traffic types are implemented according to different slices on an access network side. Due to introducing of slices on the access network side and the CU/DU separation, the CU needs to configure and send configuration information related to the slices to the DU through a fronthaul interface, and a MAC entity in the DU manages and schedules the slices in a centralized manner according to slice configuration information, to avoid interference between the slices and achieve isolation between the slices.

FIG. 1 is a schematic diagram of an architecture in which the CU and the DU are separated according to an embodiment of the present invention. In FIG. 1, information interactions are performed between the CU and the DU through the fronthaul interface. For different delays, the fronthaul interface here may be ideal or non-ideal. An ideal fronthaul interface has a relatively smaller transmission delay of, for example, tens or hundreds of microseconds. A non-ideal fronthaul interface has a relatively larger transmission delay of, for example, milliseconds. The difference between the ideal fronthaul interface and the non-ideal fronthaul interface results in different function partitions between the CU and the DU. That is, in the transmission with the non-ideal fronthaul, the delay-sensitive user plane function, such as the MAC scheduling function, needs to be implemented in the DU, and the delay-insensitive function, such as header compression, encryption and integrity inclusion in a 5G-Packet Data Convergence Protocol (5G-PDCP), needs to be implemented in the CU to meet requirements on the transmission delay.

FIG. 2 is a schematic diagram of function partition of the CU and the DU according to an embodiment of the present invention. In FIG. 2, a 5G-PDCP entity is located in the CU, the MAC entity is located in the DU, and one CU may be connected to one or more DUs. Taking DU1 as an example, a 5G-PDCP Service Data Unit (SDU) data packet from the core network is transmitted through the 5G-PDCP entity and a 5G-RLC entity, and then is transmitted to DU1 through the fronthaul interface, and the data packet from the CU is scheduled and transmitted by the MAC entity according to a priority of a logical channel. In FIG. 2, for convenience of description, one RB corresponds to one LCH. The correspondence between the RB and the LCH is not limited to the example in FIG. 2, and one RB may correspond to one LCH or multiple LCHs. Similarly, in FIG. 2, the 5G-PDCP entity is disposed in the CU and the MAC entity is disposed in the DU. The location of the 5G-RLC entity is not limited in the embodiments of the present invention. It is to be further noted that the 5G-RLC entity is indicated by a dashed box in FIG. 2, which has two meanings herein: one is the 5G-RLC entity is disposed in the CU or disposed in the DU; and the other is that some functions of the 5G-RLC entity (such as the ARQ function with a lower delay requirement) are implemented in the CU and other functions (such as segments, concatenation, reassembly and re-segments with a higher delay requirement) are implemented in the DU.

FIG. 3 is a schematic diagram of a mapping relationship between slices and radio bearers according to an embodiment of the present invention. Multiple RBs and/or LCHs may be mapped onto one slice. Moreover, one or more slices are mapped onto the MAC entity in the DU, i.e., one MAC entity manages one or more slices. The configuration information, such as the mapping relationship between the slices and the RBs and/or the LCHs, resources required by the slices, priorities of the slices and QoS levels of the slices, is configured by the CU for the DU and sent through the fronthaul interface, and the MAC entity in the DU schedules and manages the slices according to the slice configuration information of the fronthaul interface, to achieve the slice isolation and avoid the interference between the slices. The separation between the CU and the DU is as described in FIG. 2. FIG. 3 only shows a scenario in which the CU and the DU are separated. The embodiments of the present invention only consider a case where a scheduling function of the MAC entity is implemented in the distributed unit (DU). Part or all of the functions of the 5G-RLC entity may be implemented in the CU or the DU. The location of the 5G-RLC entity is not limited in the embodiments of the present invention.

Table 1 simply shows the mapping relationship between the slices and the RBs/LCHs. It may be seen from Table 1 that multiple RBs and/or LCHs may be mapped onto one slice, and the correspondence is configured by the CU for the DU through the fronthaul interface.

**Table 1**

| | | |
|---|---|---|
| slice 1 | RB (1)/LCH (1) | |
| | ...... | Optional |
| | RB(p)/LCH(p) | Optional |
| slice2 | RB (k)/LCH (j) | |
| | ...... | Optional |
| | RB (m)/LCH (n) | Optional |
| ...... | | |

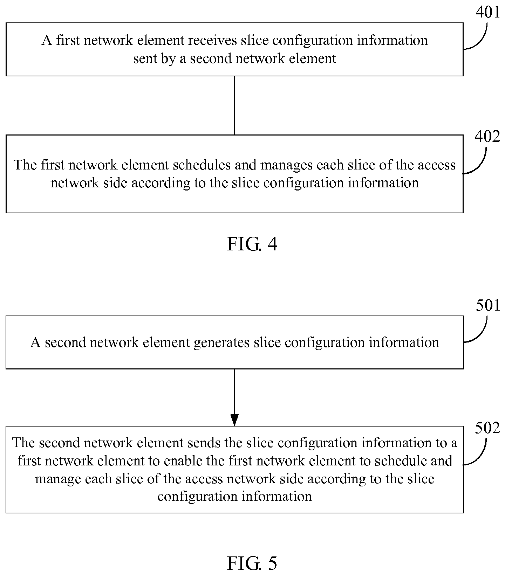

FIG. 4 is a flowchart 1 of a method for managing a network slice according to an embodiment of the present invention. In this specific example, a first network element is the DU and a second network element is the CU. As shown in FIG. 4, the method for managing the network slice includes the steps described below.

In step 401, the first network element receives slice configuration information sent by the second network element.

In the embodiment of the present invention, the first network element requests the slice configuration information from the second network element and the first network element receives the slice configuration information sent by the second network element.

In the embodiment of the present invention, on an access network side, the slices are divided according to different radio bearers or divided according to different cells or divided according to different frequencies or divided according to different traffic types or divided according to an indication of the core network or divided according to different physical layer characteristics.

In the embodiment of the present invention, the first network element receives the slice configuration information sent by the second network element in the manner described below.

The first network element receives the slice configuration information sent by the second network element through the fronthaul interface.

In the embodiment of the present invention, the slice configuration information includes at least one of: a mapping relationship between the slices and the radio bearers (RBs), a mapping relationship between the slices and the logical channels (LCHs), a mapping relationship between the slices and physical resources/physical resource pools, a priority of the slice, a quality of service (QoS) level of the slice, a maximum transmission rate of the slice and a resource usage percentage of the slice.

The mapping relationship between the slices and the radio bearers (RBs) indicates which slice each RB belongs to.

The mapping relationship between the slices and the logical channels (LCHs) indicates which slice each LCH belongs to.

Herein, the slice configuration information can be configured through a dedicated procedure and/or a global procedure. Specifically, the mapping relationship between the slices and the RBs and/or LCHs corresponds to an X2 interface dedicated procedure and is UE specific. However, the maximum rate of the slice (such as slice Aggregate Maximum Bit Rate (AMBR)), a size of a resource block reserved for the slice or the resource usage percentage of the slice is slice specific and corresponds to an X2 interface global procedure.

In the embodiment of the present invention, the resource usage percentage of the slice is used for indicating a size of a resource block reversed by the MAC entity in the first network element for the slice or a percentage of available resources.

In the embodiment of the present invention, the priority of the slice is used for indicating a priority order for the MAC entity in the first network element to schedule the slice.

In the embodiment of the present invention, the QoS level of the slice is used for indicating the MAC entity in the first network element scheduling the slice according to the QoS level.

In step 402, the first network element schedules and manages each slice of the access network side according to the slice configuration information.

In the embodiment of the present invention, the MAC entity in the first network element allocates physical resources to one or more slices according to the slice configuration information.

In the embodiment of the present invention, multiple RBs and/or LCHs may be mapped onto one slice, alternatively, different RBs and/or LCHs are mapped onto different slices.

In the embodiment of the present invention, the first network element schedules and manages each slice of the access network side according to the slice configuration information in the manner described below.

The MAC entity in the first network element performs centralized scheduling and management on one or more slices.

Alternatively, the MAC entity in the first network element performs centralized scheduling and management on one or more users.

Herein, the centralized scheduling and management refers to that multiple slices or users are scheduled and managed collectively or together.

FIG. 5 is a flowchart 2 of a method for managing a network slice according to an embodiment of the present invention. In this specific example, a first network element is the DU and a second network element is the CU. As shown in FIG. 5, the method for managing the network slice includes the steps described below.

In step 501, the second network element generates slice configuration information.

In the embodiment of the present invention, on an access network side, slices are divided according to different radio bearers or divided according to different cells or divided according to different frequencies or divided according to different traffic types or divided according to an indication of the core network or divided according to different physical layer characteristics.

In the embodiment of the present invention, the slice configuration information includes at least one of: a mapping relationship between the slices and RBs, a mapping relationship between the slices and LCHs, a mapping relationship between the slices and physical resources/physical resource pools, a priority of each slice, a quality of service (QoS) level of each slice, a maximum transmission rate of each slice and a resource usage percentage of each slice.

In the embodiment of the present invention, the slice configuration information may be configured through a dedicated procedure and/or a global procedure.

In the embodiment of the present invention, the resource usage percentage of the slice is used for indicating a size of a resource block reversed by a MAC entity in the first network element for the slice or a percentage of available resources.

In the embodiment of the present invention, the priority of the slice is used for indicating a priority for the MAC entity in the first network element to schedule data of the slice.

In the embodiment of the present invention, the QoS level of the slice is used for indicating the MAC entity in the first network element scheduling the slice according to the QoS level.

In the embodiment of the present invention, multiple RBs and/or LCHs may be mapped onto one slice, or different RBs and/or LCHs are mapped onto different slices.

In step 502, the second network element sends the slice configuration information to the first network element, such that the first network element schedules and manages each slice of the access network side according to the slice configuration information.

In the embodiment of the present invention, the second network element sends the slice configuration information to the first network element upon one of the following conditions being triggered.
(1) The second network element sends the slice configuration information to the first network element upon a slice addition event or a slice deletion event or a slice update event occurring at the access network side.
(2) The second network element sends the slice configuration information to the first network element upon the second network element receiving a request for the slice configuration information sent by the first network element.
(3) The second network element sends the slice configuration information to the first network element upon establishment, deletion or reconfiguration of the RB and/or the LCH of a user.
(4) The second network element sends the slice configuration information to the first network element in response to changing of a slice to which the RB and/or the LCH of the user belongs.

Conditions (1) and (2) correspond to the global procedure, and conditions (3) and (4) correspond to the dedicated procedure.

The method for managing the network slice in the embodiments of the present invention will be further described below in conjunction with specific application scenarios.

### Embodiment 1

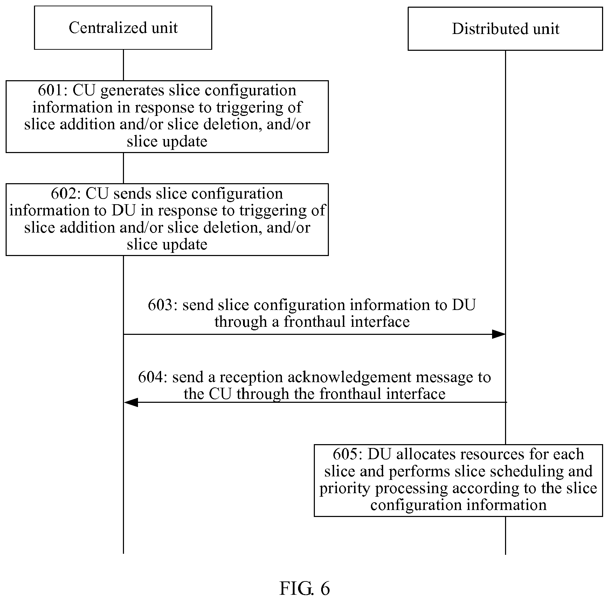

FIG. 6 is a flowchart of the generating and sending of global slice configuration information according to an embodiment of the present invention. The CU generates configuration information for each of one or more slices and sends the configuration information to the DU through a fronthaul interface. The DU performs centralized management and scheduling on the one or more slices according to slice configuration information to achieve slice isolation and avoid interference between slices. Specific steps are described below.

In step 601, the CU is triggered by a slice addition or a slice deletion or a slice update event to generate the slice configuration information.

The configuration information includes at least one of: a mapping relationship between the one or more slices and physical resources/physical resource pools, a priority of the slice, a quality of service (QoS) level of the slice, a maximum transmission rate of the slice and a resource usage percentage of the slice.

A trigger condition for generating the configuration information includes the slice addition or the slice deletion or the slice update.

Multiple RBs and/or LCHs may be mapped onto one slice, as shown in Table 1.

A MAC entity in the DU allocates resources to the one or more slices and performs priority processing on the one or more slices according to the slice configuration information.

The resource usage percentage of the slice is used for indicating a size of resource block reversed by the MAC entity in the DU for the slice.

The priority of the slice is used for indicating a priority order for the MAC entity in the DU to schedule the slice.

The QoS level of the slice is used for indicating the MAC entity in the DU scheduling the slice according to the QoS level.

The MAC entity has a scheduling function of performing the centralized management and scheduling on the one or more slices.

The slices are divided according to different radio bearers or different cells or different frequencies or different traffic types or an indication of the core network or different physical layer characteristics.

In step 602, the CU is triggered by the slice addition or slice deletion or slice update for sending the slice configuration information to the DU.

In step 603, the CU sends the slice configuration information to the DU through the fronthaul interface.

An information element (IE) transmitted through the fronthaul interface includes at least one of: the mapping relationship between the slices and the physical resources/physical resource pools, the priority of the slice, the quality of service (QoS) level of the slice, the maximum transmission rate of the slice and the resource usage percentage of the slice.

The slice configuration information is sent by the CU to the DU in response to the slice addition or addition deletion or addition update.

Alternatively, the slice configuration information sent by the CU to the DU further includes a mapping relationship between random access resources and the slices and a mapping relationship between system message transmission resources and the slices.

A wired transmission manner or a wireless transmission manner is adopted between the CU and the distributed unit.

For different transmission delay requirements, the fronthaul interface is an ideal fronthaul interface or a non-ideal fronthaul interface.

In step 604, the DU sends a reception acknowledgement message for the slice configuration information to the CU through the fronthaul interface.

The reception acknowledgement message indicates a reception state of the slice configuration information sent by the CU. That is, the reception acknowledgement message indicates whether the CU needs to retransmit the slice configuration information.

In step 605, the DU allocates resources for each slice and performs the scheduling and priority processing on the slices according to the slice configuration information.

The slice configuration information includes at least one of: the mapping relationship between the slices and the physical resources/ physical resource pools, the priority of the slice, the quality of service (QoS) level of the slice, the maximum transmission rate of the slice and the resource usage percentage of the slice.

For each slice, the MAC entity allocates a resource block of a predetermined size and performs the scheduling and priority processing according to scheduling information in the slice configuration information, thereby achieving slice isolation and avoiding the interference between the slices.

### Embodiment 2

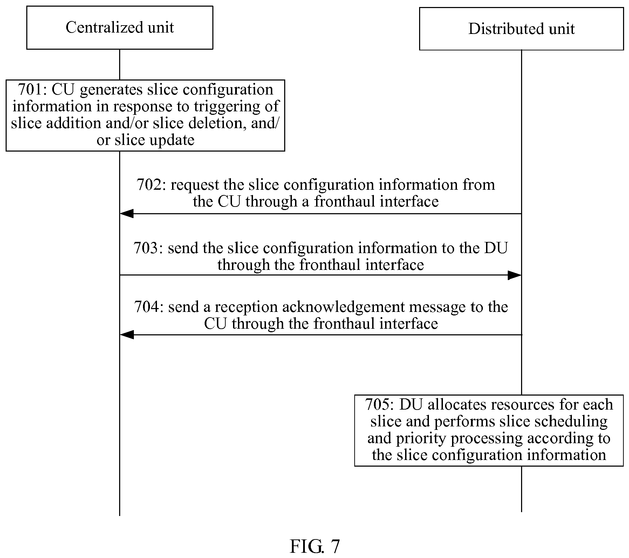

FIG. 7 is a flowchart of sending slice configuration information in response to the request of the DU according to an embodiment of the present invention. Similar to the embodiment 1, the embodiment 2 is also a global slice configuration information process, but the difference between the embodiment 2 and embodiment 1 is that in the embodiment 2 the sending of the slice configuration information is triggered by a request from the DU to the CU. Specific steps are described below.

In step 701, the CU is triggered by a slice addition or a slice deletion or a slice update to generate the slice configuration information.

The slice configuration information includes at least one of: a mapping relationship between slices and physical resources/physical resource pools, a priority of the slice, a quality of service (QoS) level of the slice, a maximum transmission rate of the slice and a resource usage percentage of the slice.

A trigger condition for generating the slice configuration information includes the slice addition or the slice deletion or the slice update.

Multiple RBs and/or LCHs may be mapped onto one slice, as shown in FIG. 1.

A MAC entity in the DU allocates resources to one or more slices and performs priority processing on the one or more slices according to the slice configuration information.

The resource usage percentage of the slice is used for indicating a size of a resource block reversed by the MAC entity in the DU for the slice.

The priority of the slice is used for indicating a priority order for the MAC entity in the DU to schedule the slice.

The QoS level of the slice is used for indicating the MAC entity in the DU scheduling the slice according to the QoS level.

The MAC entity has a scheduling function of performing centralized management and scheduling on the one or more slices.

The one or more slices are divided according to different radio bearers or different cells or different frequencies or different traffic types or an indication of the core network or different physical layer characteristics.

In step 702, the DU requests the slice configuration information from the CU through a fronthaul interface.

In step 703, the CU sends the slice configuration information to the DU through the fronthaul interface.

An information element (IE) transmitted through the fronthaul interface includes at least one of: the mapping relationship between the slices and the physical resources/resource pools, the priority of the slice, the quality of service (QoS) level of the slice, the maximum transmission rate of the slice and the resource usage percentage of the slice.

The slice configuration information is sent by the CU to the DU after the DU initiates the request for the slice configuration information to the centralized unit (CU).

A wired transmission manner or a wireless transmission manner is adopted between the CU and the distributed unit.

For different transmission delay requirements, the fronthaul interface is an ideal fronthaul interface or a non-ideal fronthaul interface.

In step 704, the DU sends a reception acknowledgement message for the slice configuration information to the CU through the fronthaul interface.

The reception acknowledgement message is used for indicating a reception state of the slice configuration information sent by the CU. That is, the reception acknowledgement message indicates whether the CU needs to retransmit the slice configuration information.

In step 705, the DU allocates resources for each slice and performs scheduling and slice priority processing according to the slice configuration information.

The slice configuration information includes at least one of: the mapping relationship between the slices and the physical resources/resource pools, the priority of the slice, the quality of service (QoS) level of the slice, the maximum transmission rate of the slice and the resource usage percentage of the slice.

The MAC entity allocates a resource block of a predetermined size to each slice and performs the scheduling and priority processing according to scheduling information in the slice configuration information to achieve slice isolation and avoid interference between the slices.

### Embodiment 3

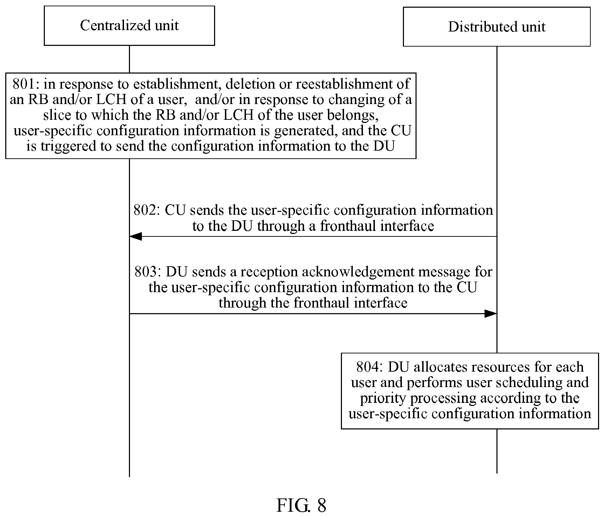

FIG. 8 is a flowchart of generating and/or sending process of user-specific configuration information triggered by establishment, deletion or reestablishment of an RB and/or LCH and/or changing of a slice to which the RB and/or LCH of a user belongs according to an embodiment of the present invention. The specific configuration information is generated for each of one or more users and sent to a DU through a fronthaul interface. The DU performs centralized management and scheduling on the one or more users according to the user-specific configuration information. Specific steps are described below.

In step 801, when establishment, deletion or reestablishment of the RB and/or LCH of the user occurs, and/or the slice to which the RB and/or LCH of the user belongs changes, the user-specific configuration information is generated and a CU is triggered to send the user-specific configuration information to the DU.

The configuration information includes at least one of: a mapping relationship between the slices and the radio bearers (RBs) and a mapping relationship between the slices and the logical channels (LCHs).

A trigger condition for generating the configuration information includes at least one of: RB establishment of the user, RB deletion of the user, RB reestablishment of the user, LCH establishment of the user, LCH deletion of the user, LCH reestablishment of the user, changing of the slice to which the RB of the user belongs, or changing of the slice to which the LCH of the user belongs.

Multiple RBs and/or LCHs may be mapped onto one slice, as shown in FIG. 1.

A MAC entity in the DU allocates resources to the one or more users and performs priority processing on the one or more users according to the user-specific configuration information.

The MAC entity has a scheduling function of performing centralized management and scheduling on the one or more users.

The slice division is performed according to different radio bearers or different cells or different frequencies or different traffic types or an indication of the core network or different physical layer characteristics.

In step 802, the CU sends the user-specific configuration information to the DU through the fronthaul interface.

An information element (IE) transmitted through the fronthaul interface includes at least one of: the mapping relationship between the slices and the radio bearers (RBs) and the mapping relationship between the slices and the logical channels (LCHs).

The user-specific configuration information is sent by the CU to the DU when the establishment, deletion or reestablishment on the RB and/or LCH of the user occurs and/or the slice to which the RB and/or LCH of the user belongs changes.

A wired transmission manner or a wireless transmission manner is adopted between the CU and the distributed unit (DU).

For different transmission delay requirements, the fronthaul interface is an ideal fronthaul interface or a non-ideal fronthaul interface.

In step 803, the DU sends a reception acknowledgement message for the user-specific configuration information to the CU through the fronthaul interface.

The reception acknowledgement message is used for indicating a reception state of the user-specific configuration information sent by the CU. That is, it indicates whether the CU needs to retransmit the user-specific configuration information.

In step 804, the DU allocates resources for each user and performs user scheduling and priority processing according to the user-specific configuration information.

The user-specific configuration information includes at least one of: the mapping relationship between the slices and the radio bearers (RBs) and the mapping relationship between the slices and the logical channels (LCHs).

The MAC entity allocates resources to the users and performs centralized management on the users according to the user-specific configuration information.

### Embodiment 4

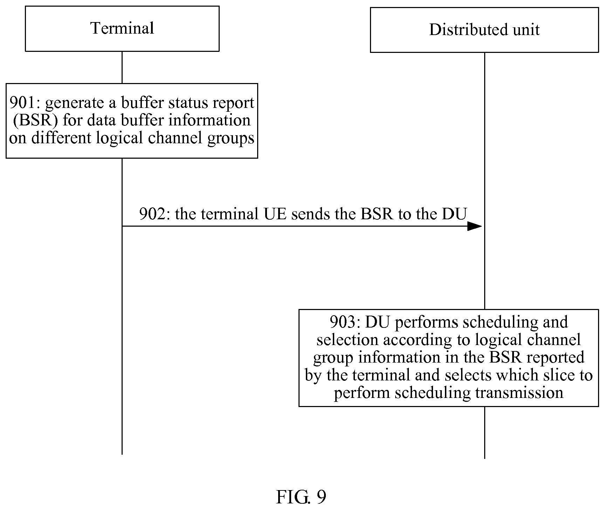

FIG. 9 is a flowchart of a process that the DU performs slice scheduling and selection based on a buffer status report (BSR) reported by a terminal according to an embodiment of the present invention. The embodiment 4 mainly describes how to perform the slice scheduling and selection and schedule terminal data to be transmitted on the corresponding slice according to logical channel group information in the BSR reported by the terminal. Specific steps are described below.

In step 901, the terminal generates the BSR according to data buffer information on the logical channel group.

The logical channel group includes one or more LCHs and belongs to a certain slice.

The data buffer information is reported in units of the logical channel group (LCG).

In step 902, the terminal sends the BSR to the DU.

A MAC entity in the DU has a slice scheduling and management function.

Slice scheduling and management indication information is configured by a CU for a first network element through a fronthaul interface.

The slice scheduling and management indication information includes a mapping relationship between slices and RBs and/or LCHs.

In step 903, the DU performs scheduling and selection according to the logical channel group information in the BSR reported by the terminal, and selects the slice where scheduling transmission is performed.

The DU determines the LCHs included in the logical channel group according to the logical channel group information in the BSR and further determines a correspondence between the LCHs and the slices. The correspondence between the slices and the LCHs or RBs is shown in Table 1.

Multiple RBs and/or LCHs may be mapped onto one slice.

The mapping relationship between the slices and the LCHs or RBs is configured by the CU for the DU through the fronthaul interface.

According to the BSR, the MAC entity in the DU performs the slice scheduling and selection, determines resources reserved for a certain slice and schedules the terminal data to be transmitted on the certain slice.

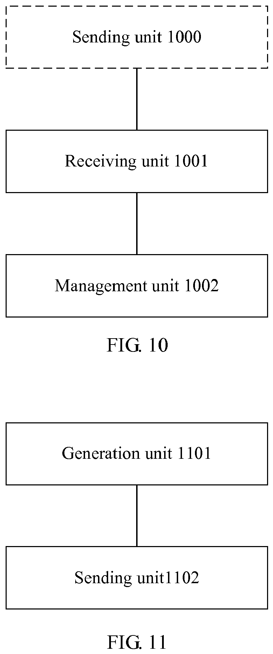

FIG. 10 is a structural diagram 1 of an apparatus for managing a network slice according to an embodiment of the present invention. As shown in FIG. 10, the apparatus includes a receiving unit 1001 and a management unit 1002.

The receiving unit 1001 is configured to receive slice configuration information sent by a second network element.

The management unit 1002 is configured to schedule and manage each slice on an access network side according to the slice configuration information.

In the embodiment of the present invention, on an access network side, the slice division is performed according to different radio bearers or different cells or different frequencies or different traffic types or an indication of the core network or different physical layer characteristics.

In the embodiment of the present invention, the receiving unit 1001 is further configured to receive the slice configuration information sent by the second network element through a fronthaul interface.

In the embodiment of the present invention, the slice configuration information includes: a mapping relationship between the slices and RBs, a mapping relationship between the slices and LCHs, a mapping relationship between the slices and physical resources/resource pools, a priority of the slice, a QoS level of the slice, a maximum transmission rate of the slice and a resource usage percentage of the slice.

In the embodiment of the present invention, the slice configuration information may be configured through a dedicated procedure and/or a global procedure.

In the embodiment of the present invention, the resource usage percentage of the slice is used for indicating a size of a resource block reversed by a MAC entity in a first network element for the slice or a percentage of available resources.

In the embodiment of the present invention, the priority of the slice is used for indicating a priority order for the MAC entity in the first network element to schedule data in the slice.

In the embodiment of the present invention, the QoS level of the slice is used for indicating the MAC entity in the first network element scheduling the slice according to the QoS level.

In the embodiment of the present invention, the management unit 1002 refers to the MAC entity in the first network element and is configured to allocate physical resources to one or more slices according to the slice configuration information.

In the embodiment of the present invention, multiple RBs and/or LCHs may be mapped onto one slice, alternatively, different RBs and/or LCHs are mapped onto different slices.

In the embodiment of the present invention, the management unit 1002 refers to the MAC entity in the first network element and is configured to perform centralized scheduling and management on at one or more slices.

In the embodiment of the present invention, the apparatus further includes a sending unit 1000. The sending unit 1000 is configured to request the slice configuration information from the second network element.

It should be understood by those skilled in the art that functions implemented by various units of the apparatus for managing the network slice shown in FIG. 10 may be understood with reference to the description of the preceding method for managing the network slice. The functions of the various units of the apparatus for managing the network slice shown in FIG. 10 may be implemented by programs running on a processor or by specific logic circuits.

In practical applications, the apparatus for managing the network slice is disposed in the first network element which may specifically be a DU. The functions implemented by the various units of the apparatus for managing the network slice may be implemented by a Central Processing Unit (CPU) or a Micro Processor Unit (MPU) or a Digital Signal Processor (DSP) or a Field Programmable Gate Array (FPGA) or the like located in the apparatus for managing the network slice.

FIG. 11 is a structural diagram 2 of an apparatus for managing a network slice according to an embodiment of the present invention. As shown in FIG. 11, the apparatus includes a generation unit 1101 and a sending unit 1102.

The generation unit 1101 is configured to generate slice configuration information.

The sending unit 1102 is configured to send the slice configuration information to a first network element to enable the first network element to schedule and manage each slice on an access network side according to the slice configuration information.

In the embodiment of the present invention, on the access network side, the slice division is performed according to different radio bearers or different cells or different frequencies or different traffic types or an indication of the core network or different physical layer characteristics.

In the embodiment of the present invention, the slice configuration information includes at least one of: a mapping relationship between the slices and RBs, a mapping relationship between the slices and LCHs, a mapping relationship between the slices and physical resources/physical resource pools, a priority of the slice, a quality of service (QoS) level of the slice, a maximum transmission rate of the slice and a resource usage percentage of the slice.

In the embodiment of the present invention, the slice configuration information may be configured through a dedicated procedure and/or a global procedure.

In the embodiment of the present invention, the resource usage percentage of the slice is used for indicating a size of a resource block reversed by a MAC entity in the first network element for the slice or a percentage of available resources.

In the embodiment of the present invention, the priority of the slice is used for indicating a priority for the MAC entity in the first network element to schedule data of the slice.

In the embodiment of the present invention, the QoS level of the slice is used for indicating the MAC entity in the first network element scheduling the slice according to the QoS level.

In the embodiment of the present invention, multiple RBs and/or LCHs may be mapped onto one slice, alternatively, different RBs and/or LCHs are mapped onto different slices.

In the embodiment of the present invention, the sending unit 1102 sends the slice configuration information to the first network element as follows.

A second network element sends the slice configuration information to the first network element in response to a slice addition event or a slice deletion event or a slice update event on the access network side.

Alternatively, the second network element sends the slice configuration information to the first network element upon the second network element receiving a request for the slice configuration information sent by the first network element.

Alternatively, the second network element sends the slice configuration information to the first network element in response to establishment, deletion or reconfiguration of the RB and/or the LCH of the user.

Alternatively, the second network element sends the slice configuration information to the first network element when a slice to which the RB and/or the LCH of the user belongs changes.

It should be understood by those skilled in the art that functions implemented by various units of the apparatus for managing the network slice shown in FIG. 11 may be understood with reference to the description of the preceding method for managing the network slice. The functions of the various units of the apparatus for managing the network slice shown in FIG. 11 may be implemented by programs running on a processor or by specific logic circuits.

In practical applications, the apparatus for managing the network slice is disposed in the second network element which may specifically be a CU. The functions implemented by the various units of the apparatus for managing the network slice may be implemented by a CPU or an MPU or a DSP or an FPGA or the like located in the apparatus for managing the network slice.

It should be understood by those skilled in the art that the embodiments of the present invention may be provided as methods, systems, or computer program products. Therefore, the present invention may be embodied in the form of hardware, software, or a combination of hardware and software. In addition, the present invention may be embodied in the form a computer program product implemented on one or more computer-usable storage media (including, but not limited to, a disk memory, an optical memory and the like) which include computer-usable program codes.

The present invention is described with reference to flowcharts or block diagrams of methods, devices (systems) and computer program products according to the embodiments of the present invention. It should be understood that computer program instructions implement each flow or block in the flowcharts or block diagrams and a combination of flows or blocks in the flowcharts or block diagrams. These computer program instructions may be provided to a general-purpose computer, a special-purpose computer, an embedded processor or a processor of other programmable data processing device to produce a machine so that instructions executed by a computer or the processor of other programmable data processing device produce a means for implementing functions specified in one or more flows in the flowcharts or one or more blocks in the block diagrams.

These computer program instructions may also be stored in a computer-readable memory which can direct the computer or other programmable data processing device to operate in a particular manner so that the instructions stored in the computer-readable memory produce a manufactured product including an instructing means. The instructing means implements the functions specified in one or more flows in the flowcharts or one or more blocks in the block diagrams.

These computer program instructions may also be loaded onto the computer or other programmable data processing device so that a series of operations or steps are performed on the computer or another programmable device to produce processing implemented by the computer. Therefore, instructions executed on the computer or another programmable device provide steps for implementing the functions specified in one or more flows in the flowcharts or one or more blocks in the block diagrams.

Accordingly, the embodiments of the present invention further provide a computer storage medium which stores computer instructions configured to execute the methods for managing the network slice according to the embodiments of the present invention.

The above are only preferred embodiments of the present invention and are not intended to limit the scope of the present invention.

### INDUSTRIAL APPLICABILITY

In the technical solutions of the embodiments of the present invention, the first network element requests the slice configuration information from the second network element and receives the slice configuration information sent by the second network element, so that the first network element can determine the correspondence between the RBs or LCHs and the slices as well as resource usage situations of the slices. The first network element performs resource allocation and logical channel priority processing for the slices according to the slice configuration information.

## Claims

1. A method for managing a network slice, comprising:
receiving, by a first network element, slice configuration information sent by a second network element; and
scheduling and managing, by the first network element, each slice on an access network side according to the slice configuration information.

2. The method for managing the network slice of claim 1, wherein, on the access network side, slices are divided according to different radio bearers or different cells or different frequencies or different traffic types or an indication of a core network or different physical layer characteristics.

3. The method for managing the network slice of claim 1, wherein the slice configuration information comprises at least one of: a mapping relationship between slices and radio bearers, RBs, a mapping relationship between the slices and logical channels, LCHs, a mapping relationship between the slices and physical resources/ physical resource pools, a priority of the slice, a quality of service level of the slice, a maximum transmission rate of the slice, and a resource usage percentage of the slice.

4. The method for managing the network slice of claim 3, wherein the slice configuration information is configured through a dedicated procedure and/or a global procedure.

5. The method for managing the network slice of claim 3, wherein
the resource usage percentage of the slice is used for indicating a size of a resource block reserved by a media access control, MAC, entity in the first network element for the slice or a percentage of available resources;
the priority of the slice is used for indicating a priority for the MAC entity in the first network element to schedule data of the slice; and
the quality of service level of the slice is used for indicating the MAC entity in the first network element scheduling the slice according to the quality of service level.

6. The method for managing the network slice of claim 1, further comprising: allocating, by a media access control, MAC, entity in the first network element, physical resources to one or more slices according to the slice configuration information.

7. The method for managing the network slice of claim 3, wherein a plurality of RBs and/or LCHs are mapped onto one slice, or different RBs and/or LCHs are mapped onto different slices.

8. The method for managing the network slice of claim 1, wherein the scheduling and managing, by the first network element, each slice on an access network side according to the slice configuration information comprises: performing, by a media access control, MAC, entity in the first network element, centralized scheduling and management on one or more slices.

9. The method for managing the network slice of claim 1, wherein when the first network element requests the slice configuration information from the second network element, the first network element receives the slice configuration information sent by the second network element.

10. A method for managing a network slice, comprising:
generating, by a second network element, slice configuration information; and
sending, by the second network element, the slice configuration information to a first network element to enable the first network element to schedule and manage a plurality of slices on an access network side according to the slice configuration information.

11. The method for managing the network slice of claim 10, wherein, on the access network side, slices are divided according to different radio bearers or different cells or different frequencies or different traffic types or an indication of a core network or different physical layer characteristics.

12. The method for managing the network slice of claim 10, wherein the slice configuration information comprises at least one of: a mapping relationship between slices and radio bearers, RBs, a mapping relationship between the slices and logical channels, LCHs, a mapping relationship between the slices and physical resources/ physical resource pools, a priority of the slice, a quality of service level of the slice, a maximum transmission rate of the slice, and a resource usage percentage of the slice.

13. The method for managing the network slice of claim 12, wherein the slice configuration information is configured through a dedicated procedure and/or a global procedure.

14. The method for managing the network slice of claim 12, wherein the resource usage percentage of the slice is used for indicating a size of a resource block reserved by a media access control, MAC, entity in the first network element for the slice or a percentage of available resources;
the priority of the slice is used for indicating a priority for the MAC entity in the first network element to schedule data of the slice; and
the quality of service level of the slice is used for indicating the MAC entity in the first network element scheduling the slice according to the quality of service level.

15. The method for managing the network slice of claim 12, wherein a plurality of RBs and/or LCHs are mapped onto one slice, or different RBs and/or LCHs are mapped onto different slices.

16. The method for managing the network slice of claim 10, wherein the second network element sends the slice configuration information to the first network element under the following trigger condition:
the second network element sends the slice configuration information to the first network element in response to a slice addition event or a slice deletion event or a slice update event on the access network side; or
the second network element sends the slice configuration information to the first network element upon the second network element receiving a request for the slice configuration information sent by the first network element; or
the second network element sends the slice configuration information to the first network element in response to establishment, deletion or reconfiguration of a radio bearer, RB, and/or a logical channel, LCH, of a user; or
the second network element sends the slice configuration information to the first network element in response to changing of a slice to which the RB and/or the LCH of the user belongs.

17. An apparatus for managing a network slice, comprising:
a receiving unit, configured to receive slice configuration information sent by a second network element; and
a management unit, configured to schedule and manage each slice on an access network side according to the slice configuration information.

18. The apparatus for managing the network slice of claim 17, wherein, on the access network side, slices are divided according to different radio bearers or different cells or different frequencies or different traffic types or an indication of a core network or different physical layer characteristics.

19. The apparatus for managing the network slice of claim 17, wherein the slice configuration information comprises a mapping relationship between slices and radio bearers, RBs, a mapping relationship between the slices and logical channels, LCHs, a mapping relationship between the slices and physical resources/ physical resource pools, a priority of the slice, a quality of service level of the slice, a maximum transmission rate of the slice, and a resource usage percentage of the slice.

20. The apparatus for managing the network slice of claim 19, wherein the slice configuration information is configured through a dedicated procedure and/or a global procedure.

21. The apparatus for managing the network slice of claim 19, wherein the resource usage percentage of the slice is used for indicating a size of a resource block reserved by a media access control, MAC, entity in the first network element for the slice or a percentage of available resources;
the priority of the slice is used for indicating a priority for the MAC entity in the first network element to schedule data of the slice; and
the quality of service level of the slice is used for indicating the MAC entity in the first network element scheduling the slice according to the quality of service level.

22. The apparatus for managing the network slice of claim 17, wherein the management unit is a media access control, MAC, entity in the first network element and is configured to allocate physical resources to one or more slices according to the slice configuration information.

23. The apparatus for managing the network slice of claim 19, wherein a plurality of RBs and/or LCHs are mapped onto one slice, or different RBs and/or LCHs are mapped onto different slices.

24. The apparatus for managing the network slice of claim 17, wherein the management unit is a media access control, MAC, entity in the first network element and is configured to perform centralized scheduling and management on one or more slices.

25. The apparatus for managing the network slice of claim 17, further comprising: a sending unit, wherein the sending unit is configured to request the slice configuration information from the second network element.

26. An apparatus for managing a network slice, comprising:
a generation unit, configured to generate slice configuration information; and
a sending unit, configured to send the slice configuration information to a first network element to enable the first network element to schedule and manage each slice on an access network side according to the slice configuration information.

27. The apparatus for managing the network slice of claim 26, wherein, on the access network side, slices are divided according to different radio bearers or different cells or different frequencies or different traffic types or an indication of a core network or different physical layer characteristics.

28. The apparatus for managing the network slice of claim 26, wherein the slice configuration information comprises at least one of: a mapping relationship between slices and radio bearers, RBs, a mapping relationship between the slices and logical channels, LCHs, a mapping relationship between the slices and physical resources/ physical resource pools, a priority of the slice, a quality of service level of the slice, a maximum transmission rate of the slice and a resource usage percentage of the slice.

29. The apparatus for managing the network slice of claim 28, wherein the slice configuration information is configured through a dedicated procedure and/or a global procedure.

30. The apparatus for managing the network slice of claim 28, wherein the resource usage percentage of the slice is used for indicating a size of a resource block reserved by a media access control, MAC, entity in the first network element for the slice or a percentage of available resources;
the priority of the slice is used for indicating a priority for the MAC entity in the first network element to schedule data of the slice; and
the quality of service level of the slice is used for indicating the MAC entity in the first network element scheduling the slice according to the quality of service level.

31. The apparatus for managing the network slice of claim 28, wherein a plurality of RBs and/or LCHs are mapped onto one slice, or different RBs and/or LCHs are mapped onto different slices.

32. The apparatus for managing the network slice of claim 26, wherein the sending unit sends the slice configuration information to the first network element under the following trigger condition:
a second network element sends the slice configuration information to the first network element in response to a slice addition event or a slice deletion event or a slice update event on the access network side; or
the second network element sends the slice configuration information to the first network element upon the second network element receiving a request for the slice configuration information sent by the first network element; or
the second network element sends the slice configuration information to the first network element in response to an establishment, deletion or reconfiguration process of a radio bearer, RB, and/or a logical channel, LCH, of a user; or
the second network element sends the slice configuration information to the first network element in response to changing of a slice to which the RB and/or the LCH of the user belongs.

33. A computer storage medium storing computer-executable instructions which are configured to execute the method for managing the network slice of any one of claims 1 to 9 or the method for managing the network slice of any one of claims 10 to 16.
